# EUROPÄISCHE PATENTSCHRIFT

(11) **EP 3 092 697 B1**
(45) Veröffentlichungstag und Bekanntmachung des Hinweises auf die Patenterteilung: **27.11.2019**
(21) Anmeldenummer: 15713891.8
(22) Anmeldetag: 02.04.2015
(51) Int. Cl.: H02J 3/28, H02J 3/46, H02J 3/38, H02J 3/00

(54) **VERFAHREN UND REGELEINRICHTUNG ZUM REGELN EINER BETRIEBSFREQUENZ EINER ENERGIEQUELLE IN EINEM WECHSELSPANNUNGSNETZ**
METHOD AND CONTROL DEVICE FOR CONTROLLING AN OPERATING FREQUENCY OF AN ENERGY SOURCE IN AN AC VOLTAGE NETWORK
PROCÉDÉ ET DISPOSITIF DE RÉGULATION SERVANT À RÉGULER UNE FRÉQUENCE DE FONCTIONNEMENT D'UNE SOURCE D'ÉNERGIE DANS UN RÉSEAU DE TENSION ALTERNATIVE

(30) Priorität: 20.05.2014 DE 102014209541
(43) Veröffentlichungstag der Anmeldung: 16.11.2016
(73) Patentinhaber: Siemens Aktiengesellschaft, 80333 München (DE)
(72) Erfinder: BAMBERGER, Joachim, 80999 München (DE); BUHL, Michael Bernhard, 85567 Grafing (DE); MÜNZ, Ulrich, 81673 München (DE); STEINKE, Florian, 81735 München (DE); WILES, Jeremy Ralph, 91322 Gräfenberg (DE)
(86) Internationale Anmeldenummer: PCT/EP2015/057281
(87) Internationale Veröffentlichungsnummer: WO 2015/176862

(56) Entgegenhaltungen:
- EP-A1- 1 914 419
- WO-A2-2012/103889
- US-A1- 2008 296 897
- US-A1- 2012 326 649
- US-A1- 2014 070 617

## Beschreibung

Im Zuge knapper werdender Ressourcen werden gegenwärtig große Anstrengungen unternommen, den Anteil erneuerbarer Energiequellen an der Gesamtenergieversorgung gegenüber dem Anteil konventioneller Energiequellen zu erhöhen. Konventionelle Energiequellen, wie z.B. Gas-, Kohle- oder Kernkraftwerke, sind durch einen Verbrauch sich nicht regenerierender Rohstoffe gekennzeichnet, während erneuerbare Energiequellen auf Energieträgern basieren, die sich regenerieren.

Gegenüber konventionellen Energiequellen sind erneuerbare Energiequellen allerdings häufig Schwankungen der aktuell verfügbaren Energieträger, z.B. der aktuellen Sonneneinstrahlung bei Photovoltaik-Anlagen oder der aktuellen Windstärke bei Windkraftanlagen unterworfen, infolgedessen die in ein gemeinsames Stromversorgungsnetz einspeisbare Leistung ebenfalls stark variieren kann. Da an ein typisches Stromversorgungsnetz häufig eine Vielzahl von Energiequellen und Verbrauchern angeschlossen ist, ist eine gewisse Koordinierung der verschiedenen Einspeiser erforderlich. Bei einem Wechselspannungsnetz dürfen insbesondere die Netzspannung und die Netzfrequenz nur geringe Variationsbreiten aufweisen. Meist werden diese Einspeiseparameter so geregelt, dass sich individuelle Schwankungen der verschiedenen Energiequellen durch gegenkoppelnde Effekte zumindest teilweise ausgleichen. Z.B. führt ein Überangebot an elektrischer Leistung bei einer konventionellen Energiequelle dazu, dass deren Betriebsfrequenz, d.h. die Frequenz der von dieser Energiequelle in das Wechselspannungsnetz eingespeisten Wechselspannung steigt. Dies führt dazu, dass aufgrund der positiven Phasenverschiebung der eingespeisten Wechselspannung mehr Leistung in das Wechselspannungsnetz fließt, wodurch sich die individuelle Belastung dieser Energiequelle erhöht und so einer weiteren Erhöhung der Betriebsfrequenz gegengesteuert wird.

Die erneuerbaren und konventionellen Energiequellen werden gegenwärtig meist dadurch koordiniert, dass die erneuerbaren Energiequellen als Stromquellen und die konventionellen Energiequellen als Spannungsquellen an das Wechselspannungsnetz angeschlossen werden. Auf diese Weise kann eine erneuerbare Energiequelle den eingespeisten Strom entsprechend der aktuell verfügbaren Leistung unter automatischer Anpassung an die im Wechselspannungsnetz aktuell vorliegende Spannung variieren. Im Unterschied dazu sind die als Spannungsquellen betriebenen konventionellen Energiequellen für die Netzbildung zuständig, d.h. für eine Vorgabe von Betriebsparametern des Wechselspannungsnetzes, wie z.B. der Netzspannung, und für die hierfür erforderliche Leistungsbereitstellung.

Bei der vorstehend beschriebenen Art der Koordinierung werden die erneuerbaren Energiequellen allerdings nur so lange am Arbeitspunkt maximaler Leistung ("Maximum Power Point" oder MPP) betrieben, wie die Netzfrequenz unterhalb eines vorgegebenen Schwellenwertes bleibt. Oberhalb davon wird in der Regel die verfügbare Leistung der erneuerbaren Energiequellen auf Kosten eines erhöhten Ressourcenverbrauchs der konventionellen Energiequellen nicht vollständig genutzt.

Aus der Publikation US 2012/0326649 A1 ist eine solarversorgte Pumpe bekannt, die abhängig von der Temperatur und ggf. anderen Parametern eines Solarmoduls auf dem Arbeitspunkt maximaler Leistung des Solarmoduls betrieben wird.

Die US2014/070617 A1 offenbart ein Verfahren zum Stabilisieren eines elektrischen Stromnetzes, in welches mehrere unterschiedliche Stromerzeuger einspeisen.

Es ist Aufgabe der vorliegenden Erfindung ein Verfahren, eine Regeleinrichtung sowie ein Computerprogrammprodukt zum Regeln einer Betriebsfrequenz einer Energiequelle in einem Wechselspannungsnetz anzugeben, die eine bessere Koordinierung verschiedener Energiequellen erlauben.

Gelöst wird diese Aufgabe durch ein Verfahren mit den Merkmalen des Patentanspruchs 1, durch eine Regeleinrichtung mit den Merkmalen des Patentanspruchs 11 sowie durch ein Computerprogrammprodukt mit den Merkmalen des Patentanspruchs 12.

Erfindungsgemäß werden zum Regeln einer Betriebsfrequenz einer ersten Energiequelle in einem Wechselspannungsnetz ein leistungsbilanzabhängiger Betriebsparameter sowie ein Umgebungsparameter der ersten Energiequelle erfasst. Die erste Energiequelle kann vorzugsweise eine erneuerbare Energiequelle, wie z.B. eine Photovoltaik-Anlage oder eine Windkraftanlage aber auch ein konventionelles Kraftwerk sein. Der leistungsbilanzabhängige Betriebsparameter kann hierbei einen Zustand der ersten Energiequelle kennzeichnen, dessen Änderung sich aus einer Leistungsbilanz an einem Energiezwischenspeicher der ersten Energiequelle ergibt. Im Fall einer Photovoltaik-Anlage kann dieser leitungsbilanzabhängige Betriebsparameter z.B. die Spannung am Zwischenkreiskondensator der Photovoltaik-Anlage sein und im Fall einer Windkraftanlage z.B. deren Rotordrehzahl. Der Umgebungsparameter kann einen oder mehrere äußere Einflüsse, z.B. die aktuelle Sonneneinstrahlung und/oder Windstärke kennzeichnen, denen die erste Energiequelle ausgesetzt ist und die eine aktuell durch die erste Energiequelle erzeugbare Leistung beeinflussen. Erfindungsgemäß wird abhängig vom erfassten Umgebungsparameter ein veränderlicher Soll-Betriebsparameter für die erste Energiequelle ermittelt. Dieser Soll-Betriebsparameter kann vorzugsweise einen Zustand der ersten Energiequelle kennzeichnen, bei dem eine unter den aktuell gegebenen Umgebungsbedingungen maximal mögliche Leistung erzeugt würde. Abhängig vom erfassten leistungsbilanzabhängigen Betriebsparameter und dem ermittelten Soll-Betriebsparameter wird die Betriebsfrequenz dergestalt geregelt, dass eine Abweichung der Betriebsfrequenz von einer vorgegebenen Frequenz an eine Abweichung des erfassten leistungsbilanzabhängigen Betriebsparameters vom ermittelten Soll-Betriebsparameter gekoppelt wird.

Erfindungsgemäß sind auch eine Regeleinrichtung sowie ein Computerprogrammprodukt zum Regeln der Betriebsfrequenz einer Energiequelle im Wechselspannungsnetz vorgesehen, die zum Ausführen des obigen Verfahrens eingerichtet sind.

Die Erfindung erlaubt es, Abweichungen einer Leistungsbilanz der ersten Energiequelle von einer aktuell ermittelten Soll-Leistungsbilanz anhand der entsprechend geregelten und über das Wechselspannungsnetz verteilten Betriebsfrequenz für andere Energiequellen im Wechselspannungsnetz auf einfache Weise erkennbar zu machen. Damit kann eine erste Energiequelle, insbesondere eine erneuerbare Energiequelle mit konventionellen Energiequellen im Wechselspannungsnetz derart koordiniert werden, dass die erneuerbare Energiequelle möglichst lange an einem Arbeitspunkt maximaler Leistung betrieben wird. Eine solche Koordinierung erlaubt eine verbrauchsoptimale Aufteilung einer erzeugten Wirkleistung zwischen erneuerbaren und konventionellen Energiequellen im gemeinsamen Wechselspannungsnetz.

Ein weiterer Vorteil der Erfindung ist darin zu sehen, dass zur Koordinierung keine zusätzliche Kommunikation zwischen den Energiequellen des gemeinsamen Wechselspannungsnetzes erforderlich ist. Auch ein Hinzufügen weiterer erster Energiequellen zum Wechselspannungsnetz erfordert keine zusätzliche Kommunikation.

Vorteilhafte Ausführungsformen und Weiterbildungen der Erfindung sind in den abhängigen Ansprüchen angegeben.

Nach einer vorteilhaften Ausführungsform der Erfindung kann die erste Energiequelle und somit insbesondere eine erneuerbare Energiequelle als Spannungsquelle im Wechselspannungsnetz betrieben werden.

Als Spannungsquelle kann die erste Energiequelle zur Netzbildung stabilisierend beitragen und die Redundanz der Spannungsstabilisierung im Wechselspannungsnetz erhöhen. Indem auch erneuerbare Energiequellen parallel zu konventionellen Energiequellen als netzbildende Spannungsquellen betrieben werden, kann somit die Wahrscheinlichkeit eines Netzzusammenbruchs erheblich verringert werden. Darüber hinaus können Lastsprünge im Wechselspannungsnetz besser kompensiert werden, da Lastsprünge in der Regel nur von Spannungsquellen und nicht von Stromquellen abgefangen werden.

Nach einer bevorzugten Ausführungsform der Erfindung kann die über das Wechselspannungsnetz verteilte Betriebsfrequenz zum Regeln einer zweiten in das Wechselspannungsnetz einspeisenden Energiequelle erfasst werden. Die zweite Energiequelle kann insbesondere eine konventionelle Energiequelle, wie z.B. ein Gas-, Kohle- oder Kernkraftwerk, aber auch eine erneuerbare Energiequelle sein. Abhängig von der erfassten Betriebsfrequenz kann eine Leistung der zweiten Energiequelle verändert werden, falls die erfasste Betriebsfrequenz von der vorgegebenen Frequenz abweicht. Die zu verändernde Leistung kann dabei z.B. eine einem Generator der zweiten Energiequelle zuzuführende mechanische Leistung oder eine von der zweiten Energiequelle in das Wechselspannungsnetz einzuspeisende Leistung sein.

Die Regelung der Leistung der zweiten Energiequelle abhängig von der erfassten Betriebsfrequenz erlaubt eine nach vorgebbaren Kriterien optimierte Aufteilung der erzeugten Wirkleistung zwischen der ersten und zweiten Energiequelle.

Nach einer bevorzugten Ausführungsform der Erfindung kann bei Abweichung der erfassten Betriebsfrequenz von der vorgegebenen Frequenz die Leistung derart geregelt werden, dass sich infolge einer Kopplung der über das Wechselspannungsnetz verteilten Betriebsfrequenz an eine Leistungsbilanz der zweiten Energiequelle die über das Wechselspannungsnetz verteilte Betriebsfrequenz der vorgegebenen Frequenz annähert.

Häufig sind insbesondere konventionelle Energiequellen derart an ein gemeinsames Wechselspannungsnetz angeschlossen, dass Phasenunterschiede der eingespeisten Wechselspannung auf die eingespeiste Leistung und damit auf die individuelle Belastung der jeweiligen Energiequelle rückkoppeln. Abhängig von der individuellen Belastung verändert sich dann die Betriebsfrequenz dieser Energiequelle derart, dass der Phasenverschiebung und damit einer weiteren Veränderung der Betriebsfrequenz dieser Energiequelle gegengesteuert wird. Durch die obige Leistungsregelung kann somit die über das Wechselspannungsnetz verteilte Betriebsfrequenz in Richtung der vorgegebenen Frequenz stabilisiert werden.

Gemäß einer vorteilhaften Ausführungsform kann für die zweite Energiequelle eine veränderliche Referenzfrequenz ermittelt werden und die Leistung mittels eines proportionalen Reglers abhängig von der erfassten Betriebsfrequenz und der ermittelten Referenzfrequenz geregelt werden. Ein solcher proportionaler Reglers erlaubt eine schnell reagierende Regelung der Leistung der zweiten Energiequelle.

Vorzugsweise kann die Referenzfrequenz mittels eines integrierenden Reglers abhängig von einer Abweichung der erfassten Betriebsfrequenz von der vorgegebenen Frequenz geregelt werden.

Durch diese Aufteilung der Leistungsregelung in eine proportionale Regelung der Leistung anhand der Referenzfrequenz und eine integrierende Regelung der Referenzfrequenz kann erreicht werden, dass sich im stationären Fall die vorgegebene Frequenz im Wechselspannungsnetz einstellt.

Bei mehreren in das Wechselspannungsnetz einspeisenden zweiten Energiequellen kann die Regelung der Leistung individuell für jede der mehreren zweiten Energiequellen erfolgen während die Regelung der Referenzfrequenz gemeinsam für alle der mehreren zweiten Energiequellen erfolgen kann. Die gemeinsame geregelte Referenzfrequenz kann an die proportionalen Regler für die mehreren zweiten Energiequellen übermittelt werden.

Für den integrierenden Regler kann ein Schwellwert für die Referenzfrequenz vorgesehen sein, dessen Erreichen eine Integration der Referenzfrequenz beeinflusst, vorzugsweise die Integration beendet. Auf diese Weise können sog. Windup-Effekte des integrierenden Reglers vermieden werden.

Vorteilhafterweise kann die Betriebsfrequenz mittels eines Wechselrichters eingestellt werden, über den die erste Energiequelle an das Wechselspannungsnetz gekoppelt ist. Dies erlaubt es, die Betriebsfrequenz der ersten Energiequelle flexibel und bedarfsgerecht einzustellen.

Nach einer vorteilhaften Ausführungsform kann vorgesehen sein, dass der leistungsbilanzabhängige Betriebsparameter anwächst, falls eine Leistungsbilanz der ersten Energiequelle positiv ist, und/oder abfällt, falls die Leistungsbilanz der ersten Energiequelle negativ ist. Damit kann die Betriebsfrequenz größer als die vorgegebene Frequenz eingestellt werden, wenn der erfasste leistungsbilanzabhängige Betriebsparameter größer als der ermittelte Soll-Betriebsparameter ist, und/oder kleiner als die vorgegebene Frequenz eingestellt werden, wenn der erfasste leistungsbilanzabhängige Betriebsparameter kleiner als der ermittelte Soll-Betriebsparameter ist.

Mit der vorstehenden Regelungscharakteristik kann eine Betriebsfrequenz, die größer als die vorgegebene Frequenz ist, im Wechselspannungsnetz anzeigen, dass die erste Energiequelle, insbesondere eine erneuerbare Energiequelle aktuell mehr Leistung an das Wechselspannungsnetz abgegeben könnte.

Ein Ausführungsbeispiel der Erfindung wird nachfolgend anhand der Zeichnung näher erläutert.

Dabei zeigen jeweils in schematischer Darstellung
- Figur 1: ein Stromversorgungsnetz mit mehreren Energiequellen,
- Figur 2: ein Kennlinienfeld zur Regelung einer Betriebsfrequenz einer Energiequelle.

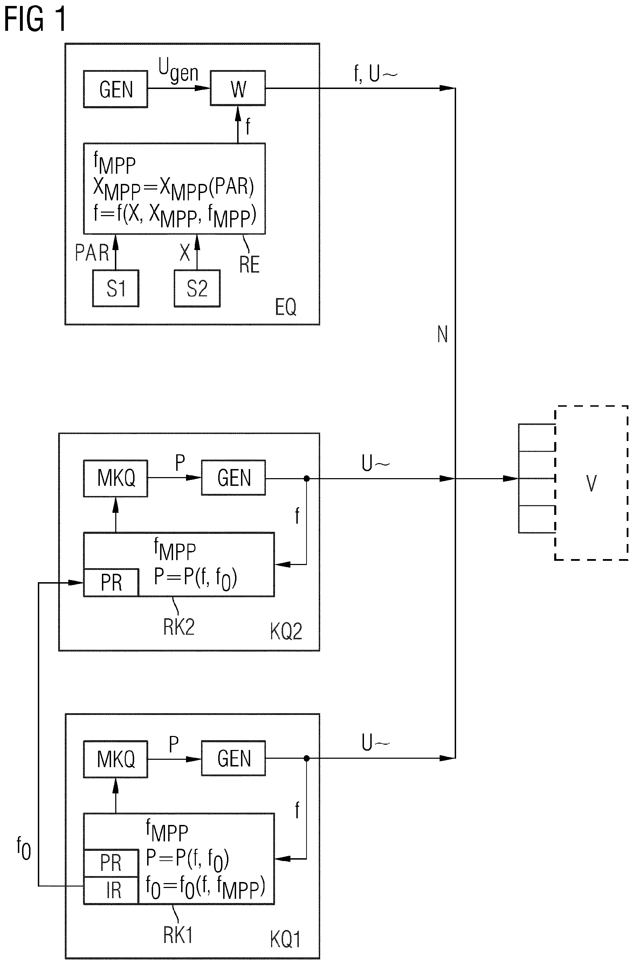

Figur 1 veranschaulicht ein Stromversorgungsnetz mit einer ersten Energiequelle EQ sowie mehreren zweiten Energiequellen KQ1 und KQ2, die in ein Wechselspannungsnetz N, z.B. ein Hoch-, Mittel- und/oder Niederspannungsnetz eine Wechselspannung U_{∼} einspeisen. An das Wechselspannungsnetz N sind eine Vielzahl von Verbrauchern V direkt oder indirekt angeschlossen.
Im vorliegenden Ausführungsbeispiel ist als erste Energiequelle EQ eine erneuerbare Energiequelle, zum Beispiel eine Photovoltaik-Anlage oder eine Windturbine, vorgesehen. Die zweiten Energiequellen KQ1 und KQ2 sind vorzugsweise konventionelle Energiequellen, wie zum Beispiel Gas-, Kohle- oder Kernkraftwerke. Mittels der Erfindung soll die erneuerbare Energiequelle EQ mit den konventionellen Energiequellen KQ1 und KQ2 derart koordiniert werden, dass die erneuerbare Energiequelle EQ ihre zu einem jeweiligen Zeitpunkt maximal erzeugbare Leistung möglichst häufig und/oder lange in das Wechselspannungsnetz N einspeisen kann, um so einen Ressourcenverbrauch der konventionellen Energiequellen KQ1 und KQ2 zu verringern. Zu diesem Zweck wird angestrebt, die erneuerbare Energiequelle EQ möglichst an oder in der Nähe von ihrem Arbeitspunkt maximaler Leistung (Maximum Power Point, MPP) zu betreiben. Der Arbeitspunkt maximaler Leistung hängt in der Regel von Umgebungsbedingungen der erneuerbaren Energiequelle EQ ab, zum Beispiel von der aktuellen Sonneneinstrahlung oder Windstärke.

In Figur 1 können die erneuerbare Energiequelle EQ sowie die konventionellen Energiequellen KQ1 und KQ2 auch stellvertretend für eine Vielzahl von erneuerbaren Energiequellen beziehungsweise konventionellen Energiequellen stehen.

Die erneuerbare Energiequelle EQ umfasst einen Generator GEN, der eine elektrische Leistung mit Spannung U_{gen}, z. B. photovoltaisch im Falle einer Photovoltaik-Anlage oder aus zugeführter mechanischer Leistung, z. B. von einem Windrotor erzeugt. Die vom Generator GEN erzeugte Spannung U_{gen} wird einem Wechselrichter W zugeführt, der aus der zugeführten Spannung U_{gen} eine Wechselspannung U_{∼} mit einstellbarer Frequenz f erzeugt. Die Spannung U_{∼} wird vom Wechselrichter W in das Wechselspannungsnetz N eingespeist. Die erneuerbare Energiequelle EQ fungiert somit im Wechselspannungsnetz N als Spannungsquelle, f ist die lokal am Einspeisepunkt der erneuerbaren Energiequelle EQ vorliegende Betriebsfrequenz der erneuerbaren Energiequelle EQ und wird über das Wechselspannungsnetz N verteilt.

Zur Regelung der Betriebsfrequenz f weist die erneuerbare Energiequelle EQ eine Regeleinrichtung RE sowie Sensoren S1 und S2 zur Erfassung von lokalen Parametern der erneuerbaren Energiequelle EQ auf. Die geregelte Betriebsfrequenz f wird von der Regeleinrichtung RE zum Wechselrichter W übermittelt. Der Sensor S1 erfasst einen (oder auch mehrere) Umgebungsparameter PAR der erneuerbaren Energiequelle EQ und übermittelt diesen an die Regeleinrichtung RE. Der Umgebungsparameter PAR gibt einen oder mehrere äußere Einflüsse, z. B. die aktuelle Sonneneinstrahlung und/oder Windstärke wieder, denen die erneuerbare Energiequelle EQ ausgesetzt ist und die eine aktuell durch die erneuerbare Energiequelle EQ erzeugbare Leistung beeinflussen.

Der Sensor S2 erfasst einen leistungsbilanzabhängigen Betriebsparameter X der erneuerbaren Energiequelle EQ und übermittelt diesen an die Regeleinrichtung RE. Der leistungsbilanzabhängige Betriebsparameter X kennzeichnet einen Zustand der erneuerbaren Energiequelle EQ, dessen Änderung sich aus der Leistungsbilanz an einem Energie-Zwischenspeicher (nicht dargestellt) der erneuerbaren Energiequelle EQ ergibt. Im Fall einer Photovoltaik-Anlage kann dieser leistungsbilanzabhängige Betriebsparameter z. B. die Spannung am Zwischenkreiskondensator der Photovoltaik-Anlage sein und im Fall einer Windkraftanlage z. B. deren Rotordrehzahl. Es sei angenommen, dass eine aktuell positive Leistungsbilanz, d. h. es wird aktuell mehr Leistung vom Generator GEN erzeugt als an das Wechselspannungsnetz N abgegeben, zu einem Anwachsen des leistungsbilanzabhängigen Betriebsparameters X führt. Insbesondere hängen eine momentan erzeugte Leistung und/oder ein momentaner Arbeitspunkt maximaler Leistung der erneuerbaren Energiequelle EQ vom leistungsbilanzabhängigen Betriebsparameter X ab.

In der Regeleinrichtung RE ist der Wert einer fest vorgegebenen Frequenz f_{MPP} gespeichert. Die vorgegebene Frequenz f_{MPP} ist konstant und bei allen erneuerbaren Energiequellen im Wechselspannungsnetz N gleich. Darüber hinaus ist die vorgegebene Frequenz f_{MPP} auch bei den konventionellen Energiequellen KQ 1 und KQ 2 bekannt und abgespeichert. Die Regeleinrichtung RE ermittelt abhängig vom Umgebungsparameter PAR einen veränderlichen Soll-Betriebsparameter X_{MPP}, der denjenigen Zustand der erneuerbaren Energiequelle EQ kennzeichnet, bei dem eine unter den aktuell gegebenen Umgebungsbedingungen maximal mögliche Leistung erzeugt würde. Dieser Zustand entspricht im Wesentlichen dem vorerwähnten Arbeitspunkt maximaler Leistung der erneuerbaren Energiequelle EQ und ist in diesem Sinne leistungsoptimierend.

Die aktuelle Betriebsfrequenz f wird durch die Regeleinrichtung RE abhängig vom aktuellen leistungsbilanzabhängigen Betriebsparameter X, dem aktuellen Soll-Betriebsparameter X_{MPP} sowie der vorgegebenen Frequenz f_{MPP} gemäß einer vorgegebenen Kennlinie oder einem Kennlinienfeld ermittelt. Insbesondere ist eine Abweichung der Betriebsfrequenz f von der vorgegebenen Frequenz f_{MPP} abhängig von einer Abweichung des leistungsbilanzabhängigen Betriebsparameters X vom Soll-Betriebsparameter X_{MPP}. Insofern die Betriebsfrequenz f über das Wechselspannungsnetz N verteilt wird, sind für andere an das Wechselspannungsnetz N angekoppelte Energiequellen die Abweichung der Betriebsfrequenz f von der im Wechselspannungsnetz N vorgegebenen Frequenz f_{MPP} und damit Abweichungen des leistungsbilanzabhängigen Betriebsparameters X vom Soll-Betriebsparameter X_{MPP} in der erneuerbaren Energiequelle EQ erkennbar.

Die konventionellen Energiequellen KQ1 und KQ2 weisen jeweils eine mechanische Kraftquelle MKQ, z. B. eine Gasturbine oder einen Dieselmotor auf, die eine mechanische Leistung P einem elektrischen Generator GEN zuführt. Der Generator GEN erzeugt anhand der zugeführten mechanischen Leistung P eine Wechselspannung U_{∼}, die in das Wechselspannungsnetz N eingespeist wird. Weiterhin verfügt die konventionelle Energiequelle KQ1 über eine Regeleinrichtung RK1 und die konventionelle Energiequelle KQ2 über eine Regeleinrichtung RK2. Die Regeleinrichtungen RK1 und RK2 erfassen jeweils die über das Wechselspannungsnetz N verteilte Betriebsfrequenz f und regeln abhängig davon die von einer jeweiligen mechanischen Kraftquelle MKQ zu erzeugende mechanische Leistung P. In den Regeleinrichtungen RK1 und RK2 ist jeweils die vorgegebene Frequenz f_{MPP} gespeichert, sodass die Regeleinrichtungen RK1 und RK2 anhand der erfassten Betriebsfrequenz f deren Abweichung von der vorgegebenen Frequenz f_{MPP} bestimmen können. Diese Abweichung zeigt, wie oben schon erwähnt, inwieweit der leistungsbilanzabhängige Betriebsparameter X vom aktuellen leistungsoptimierenden Soll-Betriebsparameter X_{MPP} abweicht.

Um die Leistungsabgabe der erneuerbaren Energiequelle EQ zu optimieren, wird die mechanische Leistung P der jeweiligen mechanischen Kraftquelle MKQ abhängig von der erfassten Betriebsfrequenz f so geregelt, dass sich die Betriebsfrequenz f der vorgegebenen Frequenz f_{MPP} und damit der leistungsbilanzabhängige Parameter X dem Soll-Betriebsparameter X_{MPP} vermöge der oben erwähnten Kopplung einer lokalen Betriebsfrequenz an eine lokale Leistungsbilanz annähert.

Zur Regelung der den Generatoren GEN zuzuführenden mechanischen Leistung P verfügen die Regeleinrichtungen RK1 und RK2 jeweils über einen proportionalen Regler PR. Ein solcher proportionaler Regler PR wird häufig auch als P-Regler bezeichnet. Die mechanische Leistung P wird hierbei jeweils als Funktion P(f, f₀) der erfassten Betriebsfrequenz f und einer Referenzfrequenz f₀ geregelt. Die Referenzfrequenz f₀ wird hierbei an zentraler Stelle im Wechselspannungsnetz N, hier mittels eines integrierenden Reglers IR der Regeleinrichtung RK1 als Funktion f₀(f, f_{MPP}) der erfassten Betriebsfrequenz f und der vorgegebenen Frequenz f_{MPP} geregelt. Ein solcher integrierender Regler wird häufig auch als I-Regler bezeichnet. Die aktuell geregelten Werte der Referenzfrequenz f₀ werden von der zentralen Stelle, hier RK1, zu den anderen im Wechselspannungsnetz N vorhandenen konventionellen Energiequellen, hier KQ2, übermittelt, um die jeweilige mechanische Leistung P durch den jeweiligen lokalen proportionalen Regler PR zu regeln.

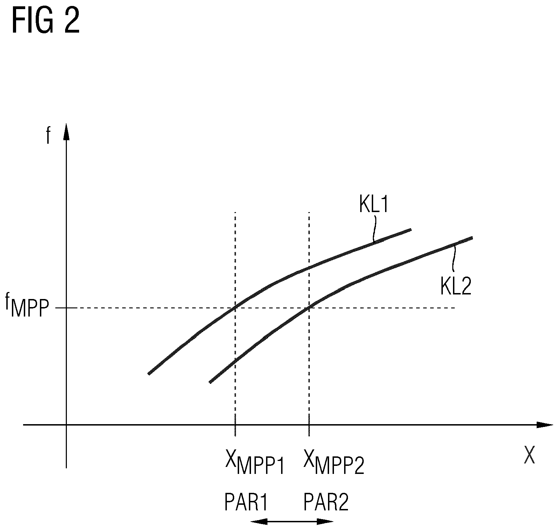

Figur 2 veranschaulicht ein Kennlinienfeld zur Regelung der Betriebsfrequenz f der erneuerbaren Energiequelle EQ durch die Regeleinrichtung RE. Entlang der Abszisse ist der leistungsbilanzabhängige Betriebsparameter X und entlang der Ordinate die Betriebsfrequenz f aufgetragen. Die konstante, vorgegebene Frequenz f_{MPP} ist durch eine punktierte Linie angedeutet. An der Abszisse sind unterschiedliche Soll-Betriebsparameter X_{MPP1} und X_{MPP2}, die unterschiedlichen Umgebungsbedingungen PAR1 und PAR2 entsprechen, durch punktierte Linien angedeutet. Bei Umgebungsbedingungen, die dem Umgebungsparameter PAR1 entsprechen, würde die erneuerbare Energiequelle EQ, die ihr aktuell maximal mögliche Leistung für X = X_{MPP1} erzeugen, während bei Umgebungsbedingungen, die dem Umgebungsparameter PAR2 entsprechen, die maximale Leistung bei X = X_{MPP2} erzeugt würde. Im Falle der durch PAR1 charakterisierten Umgebungsbedingungen erfolgt die Regelung der Betriebsfrequenz f anhand einer Kennlinie KL1, während im Fall von durch PAR2 charakterisierten Umgebungsbedingungen die Betriebsfrequenz f anhand einer Kennlinie KL2 geregelt wird. Die Kennlinien KL1 und KL2 sind so ausgerichtet, dass bei Übereinstimmung des leistungsbilanzabhängigen Betriebsparameters X mit dem jeweiligen Soll-Betriebsparameter X_{MPP1} bzw. X_{MPP2} jeweils die gleiche konstante Frequenz f_{MPP} als Betriebsfrequenz f eingestellt wird. Dies gilt auch für alle anderen Kennlinien des Kennlinienfeldes für mögliche andere Werte des Umgebungsparameters PAR.

Die Kennlinien KL1 und KL2 sind im Bereich der vorgegebenen Frequenz f_{MPP} streng monoton steigend, sodass bei steigendem leistungsbilanzabhängigen Betriebsparameter X, d.h. einer positiven Leistungsbilanz der Energiequelle EQ, die Betriebsfrequenz f ebenfalls steigt. Beispielsweise könnte die Betriebsfrequenz f geregelt sein gemäß f = f_{MPP} + k*(X-X_{MPP}), wobei k eine monoton oder streng monoton steigende Funktion oder eine positive Konstante ist. Dies bedeutet, dass f > f_{MPP} falls X > X_{MPP} und f < f_{MPP} falls X < X_{MPP}.

Mittels des Kennlinienfeldes koppelt die erneuerbare Energiequelle EQ einen jeweils aktuellen Wert des Soll-Betriebsparameters X_{MPP}, der demjenigen Zustand der erneuerbaren Energiequelle EQ entspricht, bei dem die zum aktuellen Zeitpunkt maximal mögliche Leistung erzeugt wird, an die feste vorgegebene Frequenz f_{MPP}. Hierbei kann der Wert des Soll-Betriebsparameters X_{MPP} abhängig von den aktuellen Umgebungsbedingungen variieren. Die an dem variierenden Soll-Betriebsparameter X_{MPP} orientierte, vorgegebene Frequenz f_{MPP} ist dagegen konstant.

Für die konventionellen Energiequellen KQ1 und KQ2 wird die dem jeweiligen Generator GEN zugeführte mechanische Leistung P so geregelt, dass sich im Wechselspannungsnetz N zumindest im stationären Grenzfall die vorgegebene Frequenz f_{MPP} einstellt. Das vorstehende Regelungsverhalten kann z. B. dadurch erreicht werden, dass die mechanische Leistung P durch den jeweiligen proportionalen Regler PR mittels sogenannter Droop-Kennlinien geregelt wird gemäß P = P₀ - kₚ*(f-f₀), wobei P₀ eine vorgegebene Referenzleistung, kₚ eine vorzugsweise positive Konstante und f₀ die Referenzfrequenz ist.

Während die mechanische Leistung P bei jeder konventionellen Energiequelle KQ1 und KQ2 lokal ausgewertet wird, wird die Referenzfrequenz f₀ an einer zentralen Stelle im Wechselspannungsnetz, hier KQ1, geregelt und an alle konventionellen Energiequellen KQ1 und KQ2 verteilt. Die Referenzfrequenz f₀ wird durch den zentralen integrierenden Regler IR vorzugsweise geregelt gemäß d/dt f₀ = -kᵢ*(f-f_{MPP}), wobei kᵢ eine vorzugsweise positive Konstante ist. Auf diese Weise fällt die Referenzfrequenz f₀ kontinuierlich, solange die Betriebsfrequenz f größer als die vorgegebene Frequenz f_{MPP} ist und steigt kontinuierlich, solange die Betriebsfrequenz f kleiner als die vorgegebene Frequenz f_{MPP} ist. Für die Leistungsregelung der konventionellen Energiequellen KQ1 und KQ2 bedeutet dies, dass falls die Betriebsfrequenz f größer als die vorgegebene Frequenz f_{MPP} ist, die Referenzfrequenz f₀ fällt und somit die konventionell erzeugte Leistung sinkt, wodurch der Anteil der von der erneuerbaren Energiequelle EQ stammenden Leistung im Wechselspannungsnetz N steigt. Insgesamt führt also ein Arbeitspunkt, bei dem gilt X > X_{MPP} und damit f > f_{MPP} dazu, dass die erneuerbare Energiequelle EQ ihre überschüssige Leistung gegenüber den konventionellen Energiequellen KQ1 und KQ2 bevorzugt in das Wechselspannungsnetz N einspeisen kann.

Optional kann die Referenzfrequenz f₀ durch den zentralen integrierenden Regler IR auch gemäß d/dt f₀ = -kᵢ*(f-f_{MPP}-Δf) geregelt werden, wobei Δf eine Konstante ist, mittels der eine stationäre Abweichung vom Arbeitspunkt maximaler Leistung berücksichtigt werden kann. Auf diese Weise kann in vielen Fällen gewährleistet werden, dass der Wechselrichter W eine Regelreserve bereitstellen kann.

Um eine Über- oder Unterintegration der Referenzfrequenz f₀, d.h. sogenannte Windup-Effekte zu vermeiden, können geeignete Anti-Windup-Maßnahmen im integrierenden Regler IR vorgesehen sein. So können für die Referenzfrequenz f₀ geeignete Ober- und Untergrenzen definiert werden, bei deren Erreichen die Integration in Richtung der jeweiligen Grenze beendet oder verlangsamt wird.

Erfolgt die Regelung einer oder mehrerer erneuerbaren Energiequellen sowie einer oder mehrerer konventioneller Energiequellen in der beschriebenen Weise, können die erneuerbaren Energiequellen erheblich häufiger, länger und/oder näher an ihrem Arbeitspunkt maximaler Leistung betrieben werden als ohne eine derartige Regelung. Im stationären Fall werden die erneuerbaren Energiequellen am Arbeitspunkt maximaler Leistung betrieben, zumindest solange die Anti-Windup-Maßnahmen nicht aktiv werden. Die hierzu nötige Koordinierung der Energiequellen erfolgt im Wesentlichen über die Betriebsfrequenz f und die zentrale Vorgabe der Frequenz f_{MPP}. Eine zusätzliche Kommunikation zur Koordinierung der verschiedenen Energiequellen wird hierdurch vermieden.

Sobald die Anti-Windup-Maßnahmen aktiv werden, wird die erneuerbare Energiequelle EQ in der Regel nicht mehr an ihrem Arbeitspunkt maximaler Leistung betrieben. Falls die Betriebsfrequenz f größer als die vorgegebene Frequenz f_{MPP} ist, wird die erneuerbare Energiequelle EQ abgeregelt. In diesem Fall befindet sich die Referenzfrequenz f₀ jedoch bereits bei der unteren Integrationsgrenze, sodass die konventionellen Energiequellen KQ1 und KQ2 mit ihrer jeweils minimalen Leistung betrieben werden. Im Idealfall sind die konventionellen Energiequellen KQ1 und KQ2 dann abgeschaltet. Falls dagegen die Betriebsfrequenz f kleiner als die vorgegebene Frequenz f_{MPP} ist, wird die Spannung U_{∼} im Wechselspannungsnetz N reduziert, da in diesem Fall die von der erneuerbaren Energiequelle EQ und den konventionellen Energiequellen KQ1 und KQ2 gemeinsam bereitgestellte Leistung nicht mehr ausreicht, die im Wechselspannungsnetz N benötigte Leistung bereitzustellen.

Anhand der über das Wechselspannungsnetz N verteilten Betriebsfrequenz f der erneuerbaren Energiequelle EQ ist für die anderen Energiequellen, hier KQ1 und KQ2, im Wechselspannungsnetz N und auch für beliebige andere Einrichtungen des Wechselspannungsnetzes N sowie auch für die Verbraucher V erkennbar, ob ein Überschuss oder ein Defizit hinsichtlich einer erneuerbar erzeugten Leistung vorliegt. Ein Überschuss liegt in der Regel dann vor, wenn die Betriebsfrequenz f größer als die vorgegebene Frequenz f_{MPP} ist. In dieser Situation sind die erneuerbaren Energiequellen abgeregelt. Ein Anwachsen der Last könnte somit durch die erneuerbaren Energiequellen abgefangen werden und würde nicht zu einem erhöhten Ressourcenverbrauch der konventionellen Energiequellen führen. Falls die Betriebsfrequenz f kleiner bzw. gleich der vorgegebenen Frequenz f_{MPP} ist, führt eine erhöhte Last zu einem erhöhten Einsatz der konventionellen Energiequellen. Somit kann die Leistungsaufnahme von steuerbaren Lasten an die Verfügbarkeit von erneuerbarer Energie angepasst werden, ohne dass hierfür eine zusätzliche Kommunikation, neben einer eventuellen Übermittlung der Referenzfrequenz f₀, benötigt würde.

Die vorliegende Erfindung ist nicht nur auf erneuerbare Energiequellen anwendbar, sondern in vorteilhafter Weise auch auf beliebige Energiequellen, um deren Leistungsbilanz mittels der Betriebsfrequenz f anderen an das Wechselspannungsnetz angeschlossenen Energiequellen oder beliebigen anderen Einrichtungen mitzuteilen.

## Patentansprüche

1. Verfahren zum Regeln einer Betriebsfrequenz (f) einer ersten Energiequelle (EQ) in einem Wechselspannungsnetz (N), wobei anhand der über das Wechselspannungsnetz (N) verteilten Betriebsfrequenz (f) eine zweite in das Wechselspannungsnetz (N) einspeisende Energiequelle (KQ1, KQ2) geregelt wird, wobei
a) ein Betriebsparameter (X) der ersten Energiequelle (EQ) erfasst wird,
b) ein einen äußeren Einfluss auf die erste Energiequelle (EQ) betreffender Umgebungsparameter (PAR) der ersten Energiequelle (EQ) erfasst wird,
c) abhängig vom erfassten Umgebungsparameter (PAR) ein veränderlicher Soll-Betriebsparameter (X_{MPP}) für die erste Energiequelle (EQ) ermittelt wird, und
d) abhängig vom erfassten Betriebsparameter (X) und dem ermittelten Soll-Betriebsparameter (X_{MPP}) die Betriebsfrequenz (f) dergestalt geregelt wird, dass eine Abweichung der Betriebsfrequenz (f) von einer vorgegebenen Frequenz (f_{MPP}) an eine Abweichung des erfassten Betriebsparameters (X) vom ermittelten Soll-Betriebsparameter (X_{MPP}) gekoppelt wird.

2. Verfahren nach Anspruch 1, **dadurch gekennzeichnet, dass** die erste Energiequelle (EQ) als Spannungsquelle im Wechselspannungsnetz (N) betrieben wird.

3. Verfahren nach einem der vorhergehenden Ansprüche,**dadurch gekennzeichnet, dass** zum Regeln einer zweiten in das Wechselspannungsnetz (N) einspeisenden Energiequelle (KQ1, KQ2) die über das Wechselspannungsnetz (N) verteilte Betriebsfrequenz (f) erfasst wird, und
dass eine Leistung(P) der zweiten Energiequelle (KQ1, KQ2) abhängig von der erfassten Betriebsfrequenz (f) verändert wird, falls die erfasste Betriebsfrequenz (f) von der vorgegebenen Frequenz (f_{MPP}) abweicht.

4. Verfahren nach Anspruch 3, **dadurch gekennzeichnet, dass** bei Abweichung der erfassten Betriebsfrequenz (f) von der vorgegebenen Frequenz (f_{MPP}) die Leistung (P) derart geregelt wird, dass sich infolge einer Kopplung der über das Wechselspannungsnetz (N) verteilten Betriebsfrequenz (f) an eine Leistungsbilanz der zweiten Energiequelle (KQ1, KQ2) die über das Wechselspannungsnetz (N) verteilte Betriebsfrequenz (f) der vorgegebenen Frequenz (f_{MPP}) annähert.

5. Verfahren nach Anspruch 3 oder 4, **dadurch gekennzeichnet, dass** für die zweite Energiequelle (KQ1, KQ2) eine veränderliche Referenzfrequenz (f₀) ermittelt wird und die Leistung (P) mittels eines proportionalen Reglers (PR) abhängig von der erfassten Betriebsfrequenz (f) und der ermittelten Referenzfrequenz (f₀) geregelt wird.

6. Verfahren nach Anspruch 5, **dadurch gekennzeichnet, dass** die Referenzfrequenz (f₀) mittels eines integrierenden Reglers (IR) abhängig von einer Abweichung der erfassten Betriebsfrequenz (f) von der vorgegebenen Frequenz (f_{MPP}) geregelt wird.

7. Verfahren nach Anspruch 6, **dadurch gekennzeichnet, dass** für mehrere in das Wechselspannungsnetz (N) einspeisende zweite Energiequellen (KQ1, KQ2)
- die Regelung der Leistung (P) individuell für jede der mehreren zweiten Energiequellen (KQ1, KQ2) erfolgt,
- die Regelung der Referenzfrequenz (f₀) gemeinsam für alle der mehreren zweiten Energiequellen (KQ1, KQ2) erfolgt, und
- die gemeinsame geregelte Referenzfrequenz (f₀) an die proportionalen Regler (PR) für die mehreren zweiten Energiequellen (KQ1, KQ2) übermittelt wird.

8. Verfahren nach Anspruch 6 oder 7, **dadurch gekennzeichnet, dass** für den integrierenden Regler (IR) ein Schwellwert für die Referenzfrequenz (f₀) vorgesehen ist, dessen Erreichen eine Integration der Referenzfrequenz (f₀) beeinflusst.

9. Verfahren nach einem der vorhergehenden Ansprüche, **dadurch gekennzeichnet, dass** die Betriebsfrequenz (f) mittels eines Wechselrichters (W) eingestellt wird, über den die erste Energiequelle (EQ) an das Wechselspannungsnetz (N) gekoppelt ist.

10. Verfahren nach einem der vorhergehenden Ansprüche, **dadurch gekennzeichnet, dass** der Betriebsparameter (X) anwächst, falls eine Leistungsbilanz der ersten Energiequelle (EQ) positiv ist, und/oder
abfällt, falls die Leistungsbilanz der ersten Energiequelle (EQ) negativ ist, und
dass die Betriebsfrequenz (f)
größer als die vorgegebene Frequenz (f_{MPP}) eingestellt wird, wenn der erfasste Betriebsparameter (X) größer als der ermittelte Soll-Betriebsparameter (X_{MPP}) ist, und/oder
kleiner als die vorgegebene Frequenz (f_{MPP}) eingestellt wird, wenn der erfasste Betriebsparameter (X) kleiner als der ermittelte Soll-Betriebsparameter (X_{MPP}) ist.

11. Regeleinrichtung zum Regeln einer Betriebsfrequenz (f) einer Energiequelle (EQ, KQ1, KQ2) in einem Wechselspannungsnetz (N) mit allen Mitteln zum Ausführen eines Verfahrens nach einem der vorhergehenden Ansprüche.

12. Computerprogrammprodukt zum Regeln einer Betriebsfrequenz (f) einer Energiequelle (EQ, KQ1, KQ2) in einem Wechselspannungsnetz (N), eingerichtet zum Ausführen eines Verfahrens nach einem der Ansprüche 1 bis 10.

## Claims

1. Method for controlling an operating frequency (f) of a first energy source (EQ) in an AC voltage network (N), a second energy source (KQ1, KQ2) supplying the AC voltage network (N) being controlled on the basis of the operating frequency (f) distributed across the AC voltage network (N),
a) an operating parameter (X) of the first energy source (EQ) being recorded,
b) an environmental parameter (PAR), relating to an external influence on the first energy source (EQ) of the first energy source (EQ) being recorded,
c) a variable desired operating parameter (X_{MPP}) being determined for the first energy source (EQ) on the basis of the recorded environmental parameter (PAR), and
d) the operating frequency (f) being controlled on the basis of the recorded operating parameter (X) and the determined desired operating parameter (X_{MPP}) in such a manner that a deviation of the operating frequency (f) from a predefined frequency (f_{MPP}) is coupled to a deviation of the recorded operating parameter (X) from the determined desired operating parameter (X_{MPP}).

2. Method according to Claim 1, **characterized in that** the first energy source (EQ) is operated as a voltage source in the AC voltage network (N).

3. Method according to either of the preceding claims, **characterized in that** the operating frequency (f) distributed across the AC voltage network (N) is recorded in order to control a second energy source (KQ1, KQ2) supplying the AC voltage network (N), and
**in that** a power (P) of the second energy source (KQ1, KQ2) is changed on the basis of the recorded operating frequency (f) if the recorded operating frequency (f) deviates from the predefined frequency (f_{MPP}).

4. Method according to Claim 3, **characterized in that**, if the recorded operating frequency (f) deviates from the predefined frequency (f_{MPP}), the power (P) is controlled in such a manner that, as a result of the operating frequency (f) distributed across the AC voltage network (N) being coupled to a power balance of the second energy source (KQ1, KQ2), the operating frequency (f) distributed across the AC voltage network (N) approaches the predefined frequency (f_{MPP}).

5. Method according to Claim 3 or 4, **characterized in that** a variable reference frequency (f₀) is determined for the second energy source (KQ1, KQ2) and the power (P) is controlled by means of a proportional controller (PR) on the basis of the recorded operating frequency (f) and the determined reference frequency (f₀).

6. Method according to Claim 5, **characterized in that** the reference frequency (f₀) is controlled by means of an integrating controller (IR) on the basis of a deviation of the recorded operating frequency (f) from the predefined frequency (f_{MPP}).

7. Method according to Claim 6, **characterized in that**, for a plurality of second energy sources (KQ1, KQ2) supplying the AC voltage network (N),
- the power (P) is individually controlled for each of the plurality of second energy sources (KQ1, KQ2),
- the reference frequency (f₀) is jointly controlled for all of the plurality of second energy sources (KQ1, KQ2), and
- the joint controlled reference frequency (f₀) is transmitted to the proportional controllers (PR) for the plurality of second energy sources (KQ1, KQ2).

8. Method according to Claim 6 or 7, **characterized in that** a threshold value for the reference frequency (f₀) is provided for the integrating controller (IR), the reaching of which threshold value influences integration of the reference frequency (f₀).

9. Method according to one of the preceding claims, **characterized in that** the operating frequency (f) is set by means of an inverter (W), via which the first energy source (EQ) is coupled to the AC voltage network (N).

10. Method according to one of the preceding claims, **characterized in that** the operating parameter (X)
increases if a power balance of the first energy source (EQ) is positive and/or
falls if the power balance of the first energy source (EQ) is negative, and
**in that** the operating frequency (f)
is set to be greater than the predefined frequency (f_{MPP}) if the recorded operating parameter (X) is greater than the determined desired operating parameter (X_{MPP}) and/or
is set to be smaller than the predefined frequency (f_{MPP}) if the recorded operating parameter (X) is smaller than the determined desired operating parameter (X_{MPP}).

11. Control device for controlling an operating frequency (f) of an energy source (EQ, KQ1, KQ2) in an AC voltage network (N), having all means for carrying out a method according to one of the preceding claims.

12. Computer program product for controlling an operating frequency (f) of an energy source (EQ, KQ1, KQ2) in an AC voltage network (N), set up to carry out a method according to one of Claims 1 to 10.

## Revendications

1. Procédé de régulation servant à réguler une fréquence de fonctionnement (f) d'une première source d'énergie (EQ) dans un réseau de tension alternative (N), une deuxième source d'énergie (KQ1, KQ2) injectant dans le réseau de tension alternative (N) étant régulée à l'aide de la fréquence de fonctionnement (f) répartie sur le réseau de tension alternative (N),
a) un paramètre de fonctionnement (X) de la première source d'énergie (EQ) étant saisi,
b) un paramètre d'environnement (PAR) de la première source d'énergie (EQ) concernant une influence extérieure sur la première source d'énergie (EQ) étant saisi,
c) en fonction du paramètre d'environnement saisi (PAR) étant déterminé un paramètre de fonctionnement de consigne variable (X_{MPP}) pour la première source d'énergie (EQ) et
d) la fréquence de fonctionnement (f) étant régulée, en fonction du paramètre de fonctionnement saisi (X) et du paramètre de fonctionnement de consigne déterminé (X_{MPP}), de manière telle qu'un écart entre la fréquence de fonctionnement (f) et une fréquence donnée (f_{MPP}) est couplé à un écart entre le paramètre de fonctionnement saisi (X) et le paramètre de fonctionnement de consigne déterminé (X_{MPP}).

2. Procédé selon la revendication 1, **caractérisé en ce que** la première source d'énergie (EQ) est exploitée en tant que source de tension dans le réseau de tension alternative (N).

3. Procédé selon l'une des revendications précédentes, **caractérisé en ce qu'**est saisie, pour réguler une deuxième source d'énergie (KQ1, KQ2) injectant dans le réseau de tension alternative (N), la fréquence de fonctionnement (f) répartie sur le réseau de tension alternative (N) et **en ce qu'**une puissance (P) de la deuxième source d'énergie (KQ1, KQ2) est modifiée en fonction de la fréquence de fonctionnement saisie (f) si la fréquence de fonctionnement saisie (f) présente un écart par rapport à la fréquence donnée (f_{MPP}).

4. Procédé selon la revendication 3, **caractérisé en ce que**, étant donné un écart entre la fréquence de fonctionnement saisie (f) et la fréquence donnée (f_{MPP}), la puissance (P) est régulée de telle sorte que, par suite d'un couplage de la fréquence de fonctionnement (f) répartie sur le réseau de tension alternative (N) à un bilan de puissance de la deuxième source d'énergie (KQ1, KQ2), la fréquence de fonctionnement (f) répartie sur le réseau de tension alternative (N) se rapproche de la fréquence donnée (f_{MPP}).

5. Procédé selon la revendication 3 ou 4, **caractérisé en ce qu'**une fréquence de référence variable (f₀) est déterminée pour la deuxième source d'énergie (KQ1, KQ2) et la puissance (P) est régulée au moyen d'un régulateur proportionnel (PR) en fonction de la fréquence de fonctionnement saisie (f) et de la fréquence de référence déterminée (f₀).

6. Procédé selon la revendication 5, **caractérisé en ce que** la fréquence de référence (f₀) est régulée au moyen d'un régulateur intégratif (IR) en fonction d'un écart entre la fréquence de fonctionnement saisie et la fréquence donnée (f_{MPP}).

7. Procédé selon la revendication 6, **caractérisé en ce que**, pour plusieurs deuxièmes sources d'énergie (KQ1, KQ2) injectant dans le réseau de tension alternative (N),
- la régulation de la puissance (P) a lieu individuellement pour chacune des plusieurs deuxièmes sources d'énergie (KQ1, KQ2),
- la régulation de la fréquence de référence (f₀) a lieu conjointement pour toutes les plusieurs deuxièmes sources d'énergie (KQ1, KQ2) et
- la fréquence de référence régulée commune (f0) est transmise au régulateur proportionnel (PR) pour les plusieurs deuxièmes sources d'énergie (KQ1, KQ2).

8. Procédé selon la revendication 6 ou 7, **caractérisé en ce qu'**est prévue, pour le régulateur intégratif (IR), une valeur seuil pour la fréquence de référence (f₀), dont l'obtention influence une intégration de la fréquence de référence (f₀).

9. Procédé selon l'une des revendications précédentes, **caractérisé en ce que** la fréquence de fonctionnement (f) est paramétrée au moyen d'un onduleur (W) via lequel la première source d'énergie (EQ) est couplée au réseau de tension alternative (N).

10. Procédé selon l'une des revendications précédentes, **caractérisé en ce que** le paramètre de fonctionnement (X) s'accroît si un bilan de puissance de la première source d'énergie (EQ) est positif et/ou se réduit si le bilan de puissance de la première source d'énergie (EQ) est négatif et **en ce que** la fréquence de fonctionnement (f) est paramétrée de manière à être
supérieure à la fréquence donnée (f_{MPP}) lorsque le paramètre de fonctionnement saisi (X) est supérieur au paramètre de fonctionnement de consigne déterminé (X_{MPP}) et/ou
inférieure à la fréquence donnée (f_{MPP}) lorsque le paramètre de fonctionnement saisi (X) est inférieur au paramètre de fonctionnement de consigne déterminé (X_{MPP}).

11. Dispositif de régulation pour régler une fréquence de fonctionnement (f) d'une source d'énergie (EQ, KQ1, KQ2) dans un réseau de tension alternative (N) avec tous les moyens pour exécuter un procédé selon l'une des revendications précédentes.

12. Produit de programme informatique pour réguler une fréquence de fonctionnement (f) d'une source d'énergie (EQ, KQ1, KQ2) dans un réseau de tension alternative (N), configuré pour exécuter un procédé selon l'une des revendications 1 à 10.
